# EUROPÄISCHE PATENTSCHRIFT

(11) **EP 4 011 752 B1**
(45) Veröffentlichungstag und Bekanntmachung des Hinweises auf die Patenterteilung: **09.04.2025**
(21) Anmeldenummer: 21213309.4
(22) Anmeldetag: 09.12.2021
(51) Int. Cl.: B62D 24/04, B62D 33/077, B62D 33/10, B62D 21/02, B62D 21/09

(54) **DYNAMISCHE PENDELSTÜTZENLAGERUNG FÜR TORSIONSSTEIFE AUFBAUTEN AUF SCHLECHTWEGEFAHRGESTELLEN**
DYNAMIC HINGED SUPPORT BEARING FOR TORSION-RIGID STRUCTURES ON CABLES
ROULEMENT DYNAMIQUE DE SUPPORT OSCILLANT POUR STRUCTURES RIGIDES À LA TORSION SUR CHÂSSIS POUR TRONÇONS DE MAUVAISE QUALITÉ

(30) Priorität: 10.12.2020 DE 202020005131 U
(43) Veröffentlichungstag der Anmeldung: 15.06.2022
(73) Patentinhaber: Eine Welt Reisen GmbH, 10365 Berlin (DE)
(72) Erfinder: Windisch, Robert, 01909 Großharthau-Seeligstadt (DE); Schwartz, André Steffen, 10247 Berlin (DE)
(74) Vertreter: Jannig & Repkow Patentanwälte PartG mbB

(56) Entgegenhaltungen:
- EP-A2- 1 231 129
- WO-A1-2011/056153
- WO-A1-86/00270
- FR-A1- 2 523 539

## Beschreibung

Die vorliegende Erfindung betrifft eine Hilfsrahmenkonstruktion zur Montage von Aufbauten auf sogenannten Leiterrahmen.

Für solche Hilfsrahmenkonstruktion besteht bei Fahrzeugen mit torsionssteifem Aufbau, wie Tanks oder Containern und insbesondere bei Expeditionsfahrzeugen ein Bedarf. Expeditionsfahrzeuge, welche sich überwiegend in unebenem Gelände bewegen, stehen einer Vielzahl von Anforderungen gegenüber. Grundlage für diese speziell angefertigten Fahrzeuge sind dabei in der Regel Nutzfahrzeuge mit Leiterrahmengestell und Allradantrieb. Um den Bodenkontakt aller antreibenden Räder mit möglichst gleicher Belastung gewährleisten zu können, bedarf es torsionsweicher Leiterrahmenkonstruktionen.

Im Gegensatz zu den torsionsweichen Fahrzeugrahmen bestehen die Rahmen von darauf aufgesetzten Aufbauten wie z.B. Tanks, Containern oder Wohnkabinen aus torsionssteifen Profilen. Um diesen komplementären Anforderungen gerecht zu werden, ist es notwendig, eine Verbindung in Form einer geeigneten Aufbaulagerung zu verwenden.

Der Stand der Technik im Bereich des Baus von Schlechtwegefahrzeugen umfasst Aufbaulagerungen, welche den Anforderungen großer Verwindungsfreiheit entsprechen müssen. Zu den gängigen Lagerungsarten gehören die Federlagerung, die Drei-Punkt-Lagerung und die Vier-Punkt-Lagerung (auch Rautenlagerung oder doppelte Drei-Punkt-Lagerung). Öffentlich zugängliche Informationen aus den Aufbaurichtlinien am Beispiel des Mercedes-Benz Zetros der Daimler AG beschreiben den aktuellen Stand der Technik. Des Weiteren werden die Lagerungsarten auf den Homepages der namenhaften Hersteller von Expeditionsfahrzeugen erläutert. Probleme der bestehenden Lagerungssysteme sind bei der Federlagerung die Verwendung von Festlagern im Hinterachsbereich. Der Hilfsrahmen und der Aufbau folgen somit der Bewegung, des sich verwindenden Fahrzeuges in schwerem Gelände und neigt dadurch zu kippen. Außerdem wird eine, auf den Fahrzeuglängsträgern durchgehend aufliegende, Hilfsrahmenkonstruktion verwendet. Diese schränkt das Verwindungspotenzial der Längsträger sehr stark ein.

Das Prinzip der Drei- und Vier-Punkt-Lagerung stellt somit eine Weiterentwicklung dar. Jedoch ist es notwendig die Lagerpunkte entlang der neutralen Faser der Fahrzeuglängsträger zu montieren. Aufgrund von Komponenten des Antriebsstranges oder des Fahrwerkes ist die Montage auf der neutralen Faser jedoch nur bedingt umsetzbar. Bei komplexen Geometrien der Längsträger ist die Lokalisierung der neutralen Faser zusätzlich erschwert. Liegen die Lagerpunkte in der z-Achse des Fahrzeuges ober- oder unterhalb der neutralen Faser, werden Spannungen in diese eingeleitet und die Verwindungsfreiheit der Längsträger somit eingeschränkt. Ihr volles Verschränkungspotenzial kann somit nicht genutzt werden. Spannungen werden in den Aufbau eingeleitet und der Bodenkontakt der Reifen nimmt in schwerem Gelände ab.

Weiterer Stand der Technik ist aus den Dokumenten WO 86/00270 A1, WO 2011/056153 A1, FR 2 523 539 A1, und EP 1 231 129 A2 bekannt.

Aus dem Stand der Technik bekannte Aufbaulagerungen genügen nicht den Anforderungen, eine starke Verwindung des Fahrgestelles zu gewährleisten und gleichzeitig den Aufbau vor Krafteinwirkungen zu schützen.

Ziel der Erfindung ist es daher, eine geeignete Verbindung von einem, für schwere Gelände ausgelegten, Fahrgestell mit einem torsionssteifen Aufbau wie einem Tank, Container oder einer Wohnkabine zu finden.

Diese Aufgabe wird erfindungsgemäß durch die in Patentanspruch 1 beanspruchte Vorrichtung, also die Verwendung einer dynamischen Pendelstützenlagerung als Aufbaulagerung gelöst.

Vorteilhafte Weiterbildungen der Erfindung sind Gegenstand der Unteransprüche.

Die Erfindung wird nachfolgend unter Bezugnahme auf die Figuren näher erläutert. Es zeigen
- Figur 1: ein zum Aufsetzen eines Aufbaus ausgelegtes Fahrgestell mit einer daran angebrachten und im Folgenden näher beschriebenen Aufbaulagerung,
- Figur 2: eine Darstellung der Aufbaulagerung aus Figur 1 allein,
- Figur 3: eine Explosionsdarstellung der in der Figur 2 gezeigten Aufbaulagerung,
- Figur 4: eine Wippe der in den Figuren 2 und 3 gezeigten Aufbaulagerung, und
- Figur 5: eine Pendelstütze der in den Figuren 2 und 3 gezeigten Aufbaulagerung.

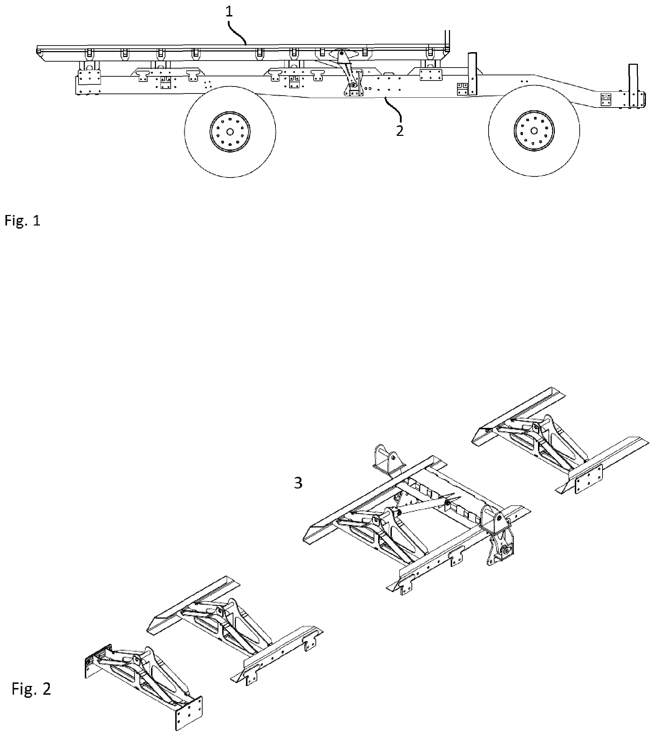

Die hier vorgestellte Aufbaulagerung ist eine durch eine Hilfsrahmenkonstruktion 3 gebildete dynamische Pendelstützenlagerung, und ist für den Einsatz bei umgebauten Seriennutzfahrzeugen geeignet. Durch sie ist eine Verbindung von einem für schwere Gelände ausgelegten Fahrgestell mit einem torsionssteifen Aufbau wie einem Tank, Container oder einer Wohnkabine 1 herstellbar, wie in Fig. 1 zu erkennen ist. Die Darstellung des Aufbaus wurde dabei, zur Vereinfachung, auf seinen Trägerrahmen reduziert.

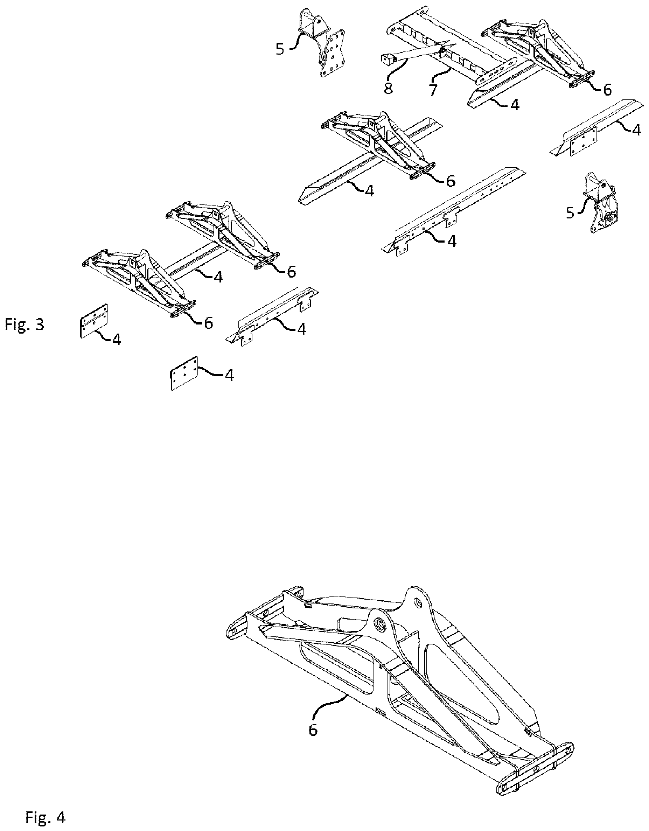

Die dynamische Pendelstützenlagerung, siehe Fig. 2 und Fig. 3, bietet eine Optimierung der gängigen Lagerungskonzepte. Durch die, aus mehreren Komponenten bestehende, Hilfsrahmenkonstruktion (3), wird eine Verwindung der Längsträger des Leiterrahmen (2) nur minimal eingeschränkt. Somit lässt die Konstruktion, etwa gegenüber zum Beispiel komplett aufliegenden Hilfsrahmen von Federlagerungen, große Neigungsdifferenzen der jeweiligen Fahrzeugachsen zu.

Des Weiteren ermöglicht die Vielzahl der Verbindungspunkte eine gute Verteilung der durch den Kabinenaufbau eingeleiteten Kräfte auf das Fahrgestell.

Die Anordnung der Wippen (6) erfolgt wie in Fig. 2 ersichtlich. Hierbei bilden die oberen Bolzenverbindungspunkte eine Flucht. Die Wippen (6) verbinden das Grundgerüst der Wohnkabine (1) Mit den einzelnen Komponenten des Hilfsrahmens (3).

Durch die konstruktive Auslegung der Wippen (6), welche in Fig. 4 zu erkennen ist, und deren Materialwahl, lassen sie sich quer zur Fahrtrichtung leicht tordieren. Somit folgen sie der Bewegung der Längsträger bei Verwindung des Leiterrahmens (2). Dadurch kann die Flucht der Bolzenverbindungen zueinander und eine horizontale Ausrichtung zum Untergrund beibehalten werden.

Aufgrund der, linear angeordneten, drehgelagerten Bolzenverbindungen der Wippen (6), muss ein seitliches Kippen des Aufbaus bzw. der Wohnkabine verhindert werden. Diese Aufgabe wird von den Pendelstützen (5) erfüllt. Sie übernehmen somit weitestgehend die Aufgabe längs angeordneter, zylindrischer Lager des Rautenlagerungskonzeptes.

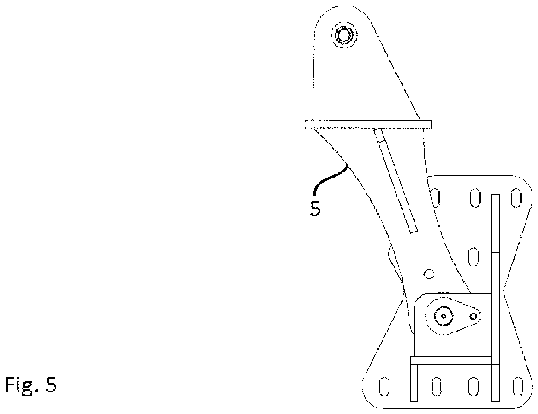

Vorteil der Pendelstützen (5) ist jedoch ihre konstruktive Schrägstellung, wie in Fig. 5 zu erkennen ist. Durch die bereits genannten, möglichen Verwindungen der Wippen (6), verdreht sich die Längsachse der Wohnkabine hinsichtlich der Fahrzeuglängsachse. Die Pendelstützen (5) sind in der Lage eine Winkeländerung anzunehmen und somit der Bewegung der Wohnkabine, entlang der x-Achse des Fahrzeuges, zu folgen. Dies ermöglichen einfach verschraubte Plastiklager, die den unteren Bereich der Pendelstützen (5) mit dem Hilfsrahmen (4) verbinden und Rotationsbewegungen zulassen. Die obere Verbindung der Pendelstützen (5) zum Aufbau ist durch Gummilagerbuchsen realisiert, welche axiale, radiale und kardanische Bewegungen kompensieren.

Bereits erwähnte Plastiklager der Pendelstützen (5) dienen ebenso als Sollbruchstelle im Fall einer Überbeanspruchung und sind aufgrund ihrer konstruktiven Eigenschaften leicht auszutauschen. Intensiven Schäden an dem Fahrgestell oder Aufbau wird somit vorgebeugt.

Die benannte konstruktive Eigenschaft der Wippen (6) begünstigt eine axiale Bewegung der Wohnkabine in Fahrzeuglängsrichtung bei Beschleunigungs- und Bremsvorgängen. Das Hutprofil (7) und die daran montierte Schubstange (8) sorgen somit abschließend für Stabilität der Wohnkabine und der Dämpfung von eintretenden Kräften.

## Patentansprüche

1. Hilfsrahmenkonstruktion (3) eines Fahrzeuges zur Montage von Aufbauten (1) auf sog. Leiterrahmen (2), wobei die Hilfsrahmenkonstruktion Hilfsrahmenkomponenten (4), und zwei Pendelstützen (5) aufweist, **dadurch gekennzeichnet, dass** die Hilfsrahmenkonstruktion mehrere, in Fahrzeuglängsrichtung angeordnete, Wippen (6) mit einem Hutprofil (7) mit Schubstange (8) aufweist und wobei die Pendelstützen (5) in der Lage sind, eine Winkeländerung anzunehmen und hierfür einfach verschraubte Plastiklager aufweisen, die einen unteren Bereich der Pendelstützen (5) mit dem Hilfsrahmen (4) verbinden und Rotationsbewegungen zulassen.

2. Hilfsrahmenkonstruktion (3) nach Anspruch 1, **dadurch gekennzeichnet, dass** die Hilfsrahmenkomponenten (4) durch Schraubverbindungen am äußeren Steg der Fahrzeug-Längsträger, den Leiterrahmen (2) mit den Wippen (6) verbinden.

3. Hilfsrahmenkonstruktion (3) nach Anspruch 1 oder 2, **dadurch gekennzeichnet, dass** die Hilfsrahmenkomponenten (4) aus mehreren Einzelteilen bestehen, um Verwindungen des Leiterrahmens (2) zu gewährleisten.

4. Hilfsrahmenkonstruktion (3) nach einem der vorhergehenden Ansprüche, **dadurch gekennzeichnet, dass** die aufbauseitigen Lager der Wippen (6) durch Gummilagerbuchsen, längs zur Fahrtrichtung, ausgelegt werden, und dass die in Längsrichtung parallel angeordneten Lagerverbindungen entlang der Längsachse des Fahrzeuges fluchten.

5. Hilfsrahmenkonstruktion (3) nach einem der vorhergehenden Ansprüche, **dadurch gekennzeichnet, dass** die Wippen (6) sich, bedingt durch ihre Konstruktion, quer zur Fahrtrichtung leicht tordieren lassen und so der Bewegung des Leiterrahmens (2) folgen.

6. Hilfsrahmenkonstruktion (3) nach einem der vorhergehenden Ansprüche, **dadurch gekennzeichnet, dass** die Pendelstützen (5) seitlich und parallel zueinander, durch angeschraubte Plastiklager an der Außenseite eines Längsträgersteges angebracht sind, und dass die Verbindungspunkte zum Aufbau eine Flucht entlang der Querachse des Fahrzeuges bilden und durch Gummilagerbuchsen realisiert werden.

7. Hilfsrahmenkonstruktion (3) nach einem der vorhergehenden Ansprüche, **dadurch gekennzeichnet, dass** die Aufnahme translatorischer Kräfte durch Beschleunigungs- und Bremsvorgänge durch ein Hutprofil (7) mit Schubstange (8) erfolgt.

8. Hilfsrahmenkonstruktion (3) nach einem der vorhergehenden Ansprüche, **dadurch gekennzeichnet, dass** untere Plastiklager der Pendelstützen (5) als Sollbruchstelle ausgelegt werden, um kostenintensive Schäden durch Überbelastung zu vermeiden.

## Claims

1. Subframe construction (3) of a vehicle for mounting superstructures (1) on what are known as ladder frames (2), wherein the subframe construction has subframe components (4), and two hinged supports (5), **characterized in that** the subframe construction has a plurality of rockers (6), which are arranged in a vehicle longitudinal direction, with a top-hat-shaped profile (7) with a thrust rod (8), and wherein the hinged supports (5) are capable of adopting an angle change and have, for this purpose, easily screwed plastic bearings which connect a lower region of the hinged supports (5) to the subframe (4) and permit rotational movements.

2. Subframe construction (3) according to Claim 1, **characterized in that** the subframe components (4) connect the ladder frame (2) to the rockers (6) by way of screw connections on the outer web of the vehicle longitudinal members.

3. Subframe construction (3) according to Claim 1 or 2, **characterized in that** the subframe components (4) consist of a plurality of individual parts in order to ensure twisting movements of the ladder frame (2).

4. Subframe construction (3) according to one of the preceding claims, **characterized in that** the body-side bearings of the rockers (6) are designed by rubber bearing bushings, longitudinally with respect to the direction of travel, and **in that** the bearing connections arranged in parallel in the longitudinal direction along the longitudinal axis of the vehicle are aligned.

5. Subframe construction (3) according to one of the preceding claims, **characterized in that** the rockers (6), due to their construction, can be easily twisted transversely to the direction of travel and thus follow the movement of the ladder frame (2).

6. Subframe construction (3) according to one of the preceding claims, **characterized in that** the hinged supports (5) are mounted laterally and parallel to one another by screwed-on plastic bearings on the outer side of a longitudinal member web, and **in that** the connecting points with respect to the body form a row along the transverse axis of the vehicle and are realized by rubber bearing bushings.

7. Subframe construction (3) according to one of the preceding claims, **characterized in that** translational forces due to acceleration and braking operations are absorbed by a top-hat-shaped profile (7) with a thrust rod (8).

8. Subframe construction (3) according to one of the preceding claims, **characterized in that** lower plastic bearings of the hinged supports (5) are designed as a predetermined breaking point in order to avoid cost-intensive damage due to overloading.

## Revendications

1. Construction de châssis auxiliaire (3) d'un véhicule, pour le montage de superstructures (1) sur des châssis (2) dits en échelle, la structure de châssis auxiliaire comprenant des composants (4) de châssis auxiliaire et deux supports oscillants (5), **caractérisée en ce que** la structure de châssis auxiliaire comprend plusieurs balanciers (6) agencés dans la direction longitudinale du véhicule, avec un profilé (7) en forme de chapeau, ayant une tige de poussée (8), et les supports oscillants (5) étant aptes à accepter un changement d'angle et comprenant à cet effet des paliers en plastique simplement vissés, qui relient une partie inférieure des supports oscillants (5) au châssis auxiliaire (4) et qui permettent des mouvements de rotation.

2. Construction de châssis auxiliaire (3) selon la revendication 1, **caractérisée en ce que** les composants (4) de châssis auxiliaire relient le châssis en échelle (2) aux balanciers (6) par des liaisons vissées sur l'âme extérieure des longerons du véhicule.

3. Construction de châssis auxiliaire (3) selon la revendication 1 ou la revendication 2, **caractérisée en ce que** les composants (4) de châssis auxiliaire sont constitués de plusieurs pièces individuelles afin d'assurer des torsions du châssis en échelle (2).

4. Construction de châssis auxiliaire (3) selon l'une des revendications précédentes, **caractérisée en ce que** les paliers côté carrosserie des balanciers (6) sont réalisés sous forme de coussinets en caoutchouc, longitudinalement par rapport à la direction de déplacement, et **en ce que** les liaisons de paliers agencées parallèlement dans la direction longitudinale sont alignées le long de l'axe longitudinal du véhicule.

5. Construction de châssis auxiliaire (3) selon l'une des revendications précédentes, **caractérisée en ce que** les balanciers (6), en raison de leur construction, sont aptes à être légèrement tordus transversalement au sens de la marche et à suivre ainsi le mouvement du châssis en échelle (2).

6. Construction de châssis auxiliaire (3) selon l'une des revendications précédentes, **caractérisée en ce que** les supports oscillants (5) sont montés latéralement et parallèlement les uns aux autres, par des paliers en plastique vissés sur la face extérieure d'une âme de longeron, et **en ce que** les points de liaison avec la carrosserie forment un alignement le long de l'axe transversal du véhicule et sont réalisés par des coussinets en caoutchouc.

7. Construction de châssis auxiliaire (3) selon l'une des revendications précédentes, **caractérisée en ce que** l'absorption des forces de translation dues aux processus d'accélération et de freinage est réalisée par un profilé (7) en forme de chapeau avec une barre de poussée (8).

8. Construction de châssis auxiliaire (3) selon l'une des revendications précédentes, **caractérisée en ce que** les paliers en plastique inférieurs des supports pendulaires (5) sont conçus comme point de rupture afin d'éviter des dommages coûteux dus à une surcharge.
